# EUROPÄISCHE PATENTSCHRIFT

(11) **EP 2 579 402 B1**
(45) Veröffentlichungstag und Bekanntmachung des Hinweises auf die Patenterteilung: **10.12.2014**
(21) Anmeldenummer: 12006912.5
(22) Anmeldetag: 05.10.2012
(51) Int. Cl.: H02B 1/052

(54) **Befestigungsvorrichtung zum Befestigen eines Installationsgeräts an einer Tragschiene**
Fastening device for fastening an installation device on a support rail
Dispositif de fixation destiné à fixer un appareil d'installation sur un rail de support

(30) Priorität: 08.10.2011 DE 102011115548
(43) Veröffentlichungstag der Anmeldung: 10.04.2013
(73) Patentinhaber: Hottinger Baldwin Messtechnik GmbH, 64293 Darmstadt (DE)
(72) Erfinder: Helmer, Thomas, 64569 Nauheim (DE); Mellert, Rolf, 64753 Brombachtal (DE)
(74) Vertreter: Staudte, Ralph

(56) Entgegenhaltungen:
- EP-A1- 0 300 065
- DE-U- 1 811 455
- US-A- 5 297 002
- US-A1- 2008 174 980

## Beschreibung

Die Erfindung betrifft eine Befestigungsvorrichtung zum Befestigen eines elektronischen oder elektrischen Installationsgeräts, Gehäuses, einer elektronischen Baugruppe u.ä., nachfolgend Installationsgerät genannt, an einer Tragschiene, insbesondere an einer sogenannten Hutschiene. Derartige Tragschienen sind vorzugsweise in Schaltschränken angeordnet.

Aus dem Stand der Technik ist eine Vielzahl von Befestigungsvorrichtungen bekannt, mit denen derartige Installationsgeräte an Tragschienen befestigt werden. So werden z. B. Befestigungsvorrichtungen vorgeschlagen, die als Rastelement einen mit einem Rasthaken versehenen Schlitten aufweisen, der gegen die Haltekraft einer Feder in einer Richtung senkrecht zur Längserstreckungsrichtung der Tragschiene verschiebbar ist. Aus der EP 1 403 970 B1 ist eine Anordnung zur Befestigung eines Gehäuses an einer Tragschiene bekannt, die wenigstens eine Haltelasche und wenigstens einen Rasthaken zur lösbaren Fixierung an der Tragschiene aufweist. Die Haltelasche greift in eines der Schenkelenden der Tragschiene ein, und der Rasthaken greift in das gegenüberliegende Schenkelende ein. Die Rasthaken sind an einem Schlitten befestigt. Durch eine Verschiebung des Schlittens gegen die Haltekraft einer Schraubenfeder kann der Eingriff der Rasthaken an der Tragschiene aufgehoben werden. Hierzu wird ein Schraubendreher in eine Betätigungsöffnung des Schlittens eingeführt.

Eine weitere Befestigungsvorrichtung wird in dem Dokument DE 10 2006 059 863 B3 beschrieben. Hier besteht die Befestigungsvorrichtung lediglich aus einer Trägerplatte und einem Befestigungselement, wobei bei dem Befestigungselement auf die Verwendung einer Schraubendruckfeder verzichtet wird. Die zur sicheren Fixierung der Befestigungsvorrichtung auf der Tragschiene erforderliche Kraft, durch welche die Rasthaken des Befestigungselements an die zweite Kante der Tragschiene gedrückt werden, wird durch eine aus dem Befestigungselement frei gestanzte und abgebogene, als Feder wirkende Zunge im Zusammenwirken mit einer an der Trägerplatte ausgebildeten Nase realisiert.

Es wurden weiterhin Befestigungsvorrichtungen für Installationsgeräte an Montageschienen vorgeschlagen, bei denen federbelastete Schnapphaken verwendet werden. Die in dem Dokument DE 18 11 455 U beschriebene Befestigungsvorrichtung weist einen zweiarmigen Hebel auf, der mithilfe eines weiteren seitlich herausragenden Betätigungsarms um eine Achse gegen die Kraft einer Schraubendruckfeder aus einer Befestigungslage in eine Öffnungslage schwenkbar ist. In der Verriegelungsstellung übt die Schraubenfeder auf den einen der Hebelarme eine Druckkraft derart aus, dass ein an einem anderen Hebelarm ausgebildeter Schnapphaken unter eines der Schenkelenden der Montageschiene gedrückt wird, während das gegenüberliegende Schenkelende der Montageschiene in eine Haltelasche geschoben wird.

In der DE 39 10 938 C2 wird eine Anordnung mit einem Schnapphaken und einer Druckfeder vorgeschlagen. Eine Befestigungsvorrichtung zur lösbaren Schnellbefestigung eines Schutzschaltgerätes auf einer Befestigungsschiene weist einen Hebel auf, der um eine Lagerstelle in dem Schutzschaltgerät drehbar ist. Der Hebel kann gegen den Widerstand einer Schraubenfeder aus einer Öffnungsstellung in eine Befestigungsstellung gedreht werden. Die Befestigung erfolgt dadurch, dass der Hebel durch die Federkraft über eine Verklinkungskante an eine Tragschiene so drückt, dass sich diese an einem Vorsprung und der Befestigungsebene des Schutzschaltgerätes abstützt. Beim Drehen des Hebels zwischen dessen Öffnungs- und Befestigungsstellung wird die Druckfeder bezüglich der Lagerstelle durch eine Totpunktlage geschwenkt.

Alle Befestigungsvorrichtungen für derartige elektrische und elektronische Geräte auf Tragschienen nach dem Stand der Technik weisen elastische Elemente auf. Beim Einsatz der Befestigungsvorrichtungen in erschütterungsintensiven Bereichen, z.B. direkt an Pressen, können Probleme auftreten. Es gibt einerseits Schwerlastausführungen, bei denen durch Einsetzen einer zweiten Feder die Schließkraft verdoppelt werden kann. Andererseits ist es aber wünschenswert, die Kraft, die zum Bewegen des Befestigungselements in die Freigabestellung zwecks Demontage der Befestigungsvorrichtung von der Tragschiene benötigt wird, von Hand aufzubringen, sodass einer Erhöhung der Federkraft Grenzen gesetzt sind.

Eine sichere kraftschlüssige Arretierung von Baugruppen auf Tragschienen erreicht man durch zusätzliche Verschraubung der auf der Tragschiene durch Einrasten aufgesetzten Befestigungsvorrichtung. In der DE 28 30 362 C2 wird ein Tragschienen-Aufsatzstück für hutförmige Tragschienen beschrieben, wobei die kraftschlüssige Verbindung zwischen dem Aufsatzstück und der Tragschiene durch Anpressen eines Feststellbügels gegen die Ränder der Tragschiene mittels einer Befestigungsschraube von oben hergestellt wird. Diese Anordnung hat jedoch den Nachteil, dass sie umständlich zu handhaben ist.

Es sind auch kraftschlüssige Befestigungsvorrichtungen für Reihenklemmen an Tragschienen bekannt. Hierbei kommt es insbesondere auf eine sichere elektrische Verbindung zwischen einem Leiter und einer Tragschiene an. In der DE 33 39 365 C2 ist eine Schutzleiter-Verbindungsklemme für hutförmige Tragschienen offenbart, bei welcher durch eine Verschraubung eine kontaktsichere Verbindung zwischen der Befestigungsvorrichtung und der Tragschiene hergestellt wird. Hier ist an einem Klemmkörper eine zweiarmige Klemmwippe gelagert, wobei deren äußerer Klemmarm derart von einer Klemmschraube mit einer Kraft beaufschlagt wird, dass ein innerer Klemmarm einen Randschenkel der hutförmigen Trägerschiene untergreift. Auch diese Befestigungsvorrichtung ist umständlich anzubringen und erfordert für die Montage und Demontage entsprechendes Werkzeug.

Es ist die Aufgabe der Erfindung, eine Befestigungsvorrichtung zum Befestigen eines Installationsgeräts an einer zwei Schenkel aufweisenden Tragschiene bereitzustellen, wobei die Befestigungsvorrichtung einerseits eine sichere elektrische und mechanische Verbindung gewährleisten und andererseits eine einfache Handhabung ermöglichen soll.

Diese Aufgabe wird mit einer Befestigungsvorrichtung nach Patentanspruch 1 gelöst, wobei die Befestigungsvorrichtung nachfolgende Merkmale aufweist: ein Gehäuse mit einer daran ausgebildeten Halteklaue zum Umfassen des oberen Schenkels der Tragschiene, einen Kipphebel, der eine Klemmklaue aufweist und auf einer in das Gehäuse eingesetzten Achse schwenkbar gelagert ist, einen auf den Kipphebel wirkenden Federmechanismus, der den Kipphebel schwenkt und dessen Klemmklaue auf den unteren Schenkel der Tragschiene drückt, einen in dem Gehäuse angeordneten Anschlag, der die Schwenkbewegung des Kipphebels und damit die Bewegung der Klemmklaue in Richtung Halteklaue begrenzt, eine verstellbare Arretiervorrichtung zur Herstellung eines Arretierzustands, bei welchem die Klemmklaue des Kipphebels hinter den unteren Schenkel der Tragschiene gedrückt ist und ein Abschnitt des Kipphebels an den Anschlag gedrückt ist, d. h. die Arretiervorrichtung drückt im Arretierzustand den Kipphebel sowohl gegen die Tragschiene als auch gegen den Anschlag.

Nachfolgend werden die Vorteile der Befestigungsvorrichtung erläutert: Ein wesentlicher Vorteil besteht darin, dass mit dem von der Arretiervorrichtung bewirkten Anpressen des Kipphebels an den Anschlag ein mechanisches, d. h. kräftemäßiges Verspannen des Kipphebels innerhalb des Gehäuses der Befestigungsvorrichtung eintritt. Diese Verspannung erhöht die Starrheit und somit die gesamte Stabilität der Befestigungsvorrichtung. Dadurch wird erreicht, dass Schwingungen der Tragschiene keine Lockerung der mechanischen Klemmung bewirken können und somit auch keine kurzeitigen Unterbrechungen des elektrischen Kontaktes auftreten können. Die höhere Stabilität der mechanisch verspannten Befestigungsvorrichtung ermöglicht es auch, die Befestigungsvorrichtung klein und leicht zu konstruieren und somit Material einzusparen.

Der Anschlag verhindert auch ein Verbiegen der Tragschiene durch den Kipphebel, wenn versehentlich die Arretiervorrichtung zu stark angezogen wird. Solche Deformationen würden ein seitliches Verschieben der Befestigungsvorrichtung auf der Tragschiene erschweren.

Bei einer vorteilhaften Ausgestaltung der Befestigungsvorrichtung nach Anspruch 2 ist der Federmechanismus eine Schenkelfeder mit zwei Schenkeln, welche auf der Achse des Kipphebels vorgespannt angeordnet ist, sodass deren einer Schenkel im Gehäuse anliegt und der andere Schenkel gegen den Kipphebel drückt.

Bei einer vorteilhaften Ausgestaltung der Befestigungsvorrichtung nach Anspruch 3 weist die Arretiervorrichtung eine Zylinderschraube auf, die in einer Gewindebohrung im Gehäuse drehbar selbsthemmend gehalten ist. Dadurch wird ein Lösen der Zylinderschraube auch bei auftretenden Vibrationen verhindert.

Bei einer vorteilhaften Ausgestaltung der Befestigungsvorrichtung nach Anspruch 4 weist die Arretiervorrichtung eine Zylinderschraube auf, die in einer Gewindebohrung des Gehäuses angeordnet ist, wobei am Schaft der Zylinderschraube eine Schraubenfeder angeordnet ist. Im nicht arretierten Zustand drückt nur die Schraubenfeder gegen den Kipphebel und im arretierten Zustand drücken die Zylinderschraube und die Druckfeder gegen den Kipphebel.

Es ist zu betonen, dass der Fachmann auch andere Ausführungsformen des Federmechanismus oder der Arretiervorrichtung auswählen kann, da die mechanisch vorteilhaften Eigenschaften der Befestigungsvorrichtung, d. h. deren hohe mechanische Stabilität, ausschließlich durch die Merkmalskombination nach Anspruch 1 bewirkt wird und somit unabhängig von der konkreten Ausgestaltung des Federmechanismus oder der Arretiervorrichtung sind. So ist es z. B. möglich, dass die Arretiervorrichtung als Exzenterklemmung ausgebildet ist und andere Federformen zu Einsatz kommen.

Die Erfindung wird nachstehend anhand von zwei Ausführungsbeispielen unter Bezugnahme auf schematische Zeichnungen näher erläutert.
- Fig. 1a: zeigt eine perspektivische Ansicht einer an einer Tragschiene montierten Befestigungsvorrichtung.
- Fig. 1b: zeigt eine Explosionsdarstellung des Gegenstandes von Fig. 1 a.
- Fig. 2a, b: zeigen eine Schnittdarstellung eines ersten Ausführungsbeispiels der Befestigungsvorrichtung.
- Fig. 3: zeigt eine Schnittdarstellung eines zweiten Ausführungsbeispiels der Befestigungsvorrichtung.

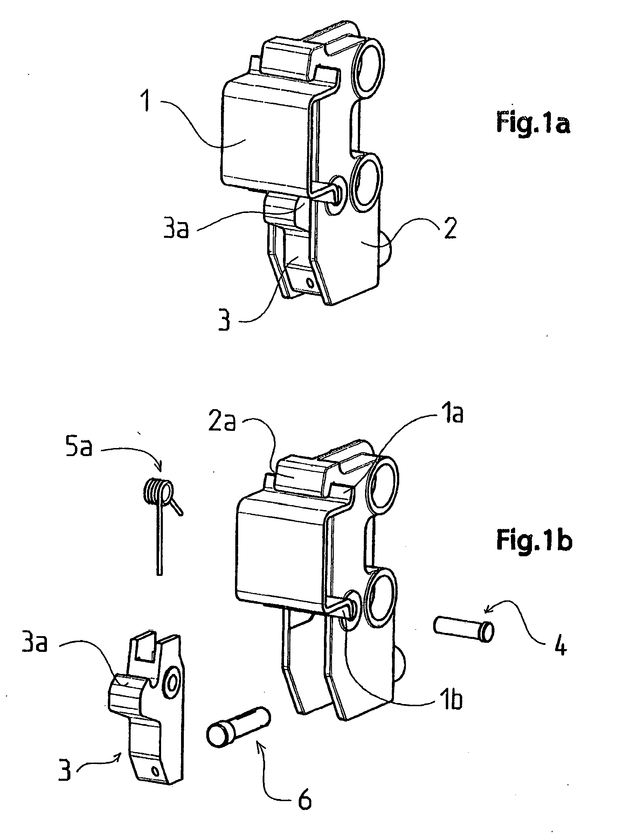

Figur 1 zeigt in perspektivischer Darstellung eine an einer Tragschiene 1 montierte Befestigungsvorrichtung mit einem Metallgehäuse 2. An dem Gehäuse 2 ist eine Halteklaue 2a ausgebildet, die in einen Schenkel 1 a der Tragschiene 1 eingehängt wird. Ein federbelasteter Kipphebel 3 hintergreift mit seiner Klemmklaue 3a im eingeschnappten Zustand der Befestigungsvorrichtung den zweiten Schenkel 1 b der Tragschiene 1. Weiterhin sind Befestigungsbohrungen erkennbar, um die Befestigungsvorrichtung an einem Installationsgerät (nicht gezeigt) zu befestigen.

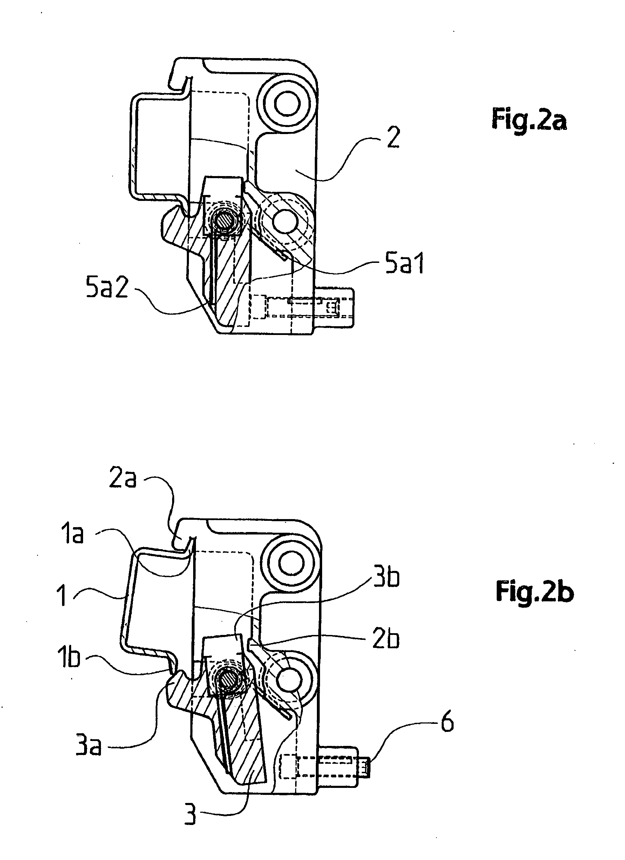

Die Figuren 2a, b zeigen eine Schnittansicht der Befestigungsvorrichtung in einem ersten Ausführungsbeispiel. Der Kipphebel 3 wird mittels einer Schenkelfeder 5a, in Fig. 1b gezeigt, in eine Klemmposition gedrängt.

Zum Montieren der Befestigungsvorrichtung an die Tragschiene 1 wird zuerst die Halteklaue 2a in den Schenkel 1a der Tragschiene 1 eingehängt und dann die Befestigungsvorrichtung in Richtung Tragschiene 1 geschwenkt. Dabei wird vom Schenkel 1 b der Tragschiene 1 der Kipphebel 3 gegen die Federkraft so weit nach hinten gedrückt, bis die Klemmklaue 3a über den Schenkel 1 b der Tragschiene 1 gleitet und einschnappt.

Die Klemmklaue 3a ist abgerundet, sodass beim Schwenken der Befestigungsvorrichtung und des damit verbundenen Drängens des Kipphebels 3 gegen den Schenkel 1 b der Tragschiene 1 die Klemmklaue 3a aufgedrückt wird. Nach dem Einrasten wird die Schraube 6 in der Gehäusebohrung so weit eingeschraubt, bis deren oberes Ende gegen den Kipphebel 3 drückt und somit die Klemmklaue 3a gegen den Schenkel der Tragschiene 1 presst. Gleichzeitig drückt der Kipphebelabschnitt 3c gegen den als Anschlag dienenden Gehäusevorsprung 2b, wodurch die vorstehend beschriebenen vorteilhaften Eigenschaften, d. h. die innere Verspannung, erzeugt werden.

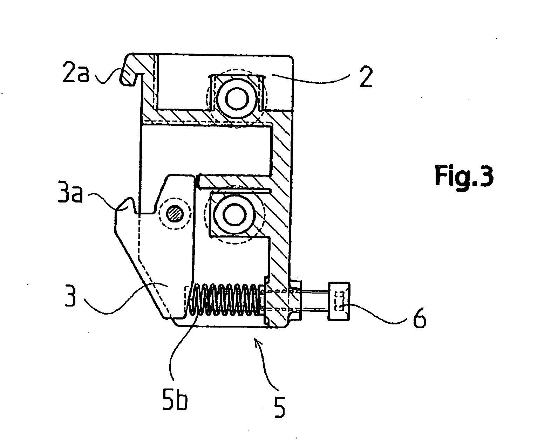

Die Figur 3 zeigt eine Schnittdarstellung eines zweiten Ausführungsbeispiels der Befestigungsvorrichtung. Wie die Befestigungsvorrichtung gemäß dem ersten Ausführungsbeispiel weist auch diese Befestigungsvorrichtung ein Gehäuse 2 und einen Kipphebel 3, aber einen anderen Federmechanismus und eine andere Arretiervorrichtung auf. Diese Arretiervorrichtung 5 weist eine Zylinderschraube 6 und eine Schraubenfeder 5b auf, die am Schaft der Zylinderschraube 6 angeordnet ist. Im nicht arretierten Zustand drückt nur die Schraubenfeder 5b gegen den Kipphebel 3 und im arretierten Zustand drücken die Zylinderschraube 6 und die Schraubenfeder 5b gegen den Kipphebel 3. Somit bilden der Federmechanismus und die Arretiervorrichtung eine Baueinheit.

Das Material für das Gehäuse und den Kipphebel kann der Fachmann nach den Erfordernissen auswählen. Besonders kostengünstig ist Zinkdruckguss.

## Patentansprüche

1. Befestigungsvorrichtung zum Befestigen eines Installationsgeräts an einer, einen oberen und einen unteren Schenkel (1a, 1 b) aufweisenden Tragschiene (1), wobei die Befestigungsvorrichtung nachfolgende Merkmale aufweist:
- ein Gehäuse (2) mit einer daran ausgebildeten Halteklaue (2a) zum Umfassen des oberen Schenkels (1 a) der Tragschiene (1),
- einen Kipphebel (3), der eine Klemmklaue (3a) aufweist und auf einer in das Gehäuse (2) eingesetzten Achse (4) schwenkbar gelagert ist,
- einen auf den Kipphebel (3) wirkenden Federmechanismus (5a, 5b), der den Kipphebel (3) schwenkt und dessen Klemmklaue (3a) auf den unteren Schenkel (1 b) der Tragschiene (1) drückt,
- einen in dem Gehäuse (2) angeordneten Anschlag (2b), der die Schwenkbewegung des Kipphebels (3) begrenzt, und
- eine verstellbare Arretiervorrichtung (6) zur Herstellung eines Arretierzustands, bei welchem
- die Klemmklaue (3a) des Kipphebels (3) gegen den unteren Schenkel (1 b) der Tragschiene (1) gedrückt ist und
- ein Abschnitt (3b) des Kipphebels (3) an den Anschlag (2b) gepresst ist.

2. Befestigungsvorrichtung nach Anspruch 1, wobei der Federmechanismus eine auf der Achse (4) vorgespannt angeordnete Schenkelfeder (5a) ist, deren einer Schenkel (5a1) im Gehäuse (2) anliegt und deren anderer Schenkel (5a2) gegen den Kipphebel (3) drückt.

3. Befestigungsvorrichtung nach Anspruch 2, wobei die Arretiervorrichtung (6) eine Zylinderschraube ist, die in einer Gewindebohrung im Gehäuse (2) drehbar selbsthemmend gehalten ist.

4. Befestigungsvorrichtung nach Anspruch 1, wobei die Arretiervorrichtung (6) eine Zylinderschraube ist, die in einer Gewindebohrung des Gehäuses (2) angeordnet ist, und der Federmechanismus eine Schraubenfeder (5b) ist, die am Schaft der Zylinderschraube angeordnet ist, wobei im nicht arretierten Zustand nur die Schraubenfeder (5b) gegen den Kipphebel (3) drückt und im arretierten Zustand die Zylinderschraube und die Schraubenfeder gegen den Kipphebel (3) drücken.

## Claims

1. Fastening device for fastening an installation apparatus on a bearing rail (1) having a top leg and a bottom leg (1 a, 1 b), wherein the fastening device comprises the following features:
- a case (2) with a holding claw (2a) formed thereon for embracing the top leg (1 a) of the bearing rail (1),
- a rocking lever (3) which comprises a clamping claw (3a) and is pivoted on an axle (4) inserted into the case (2),
- a spring mechanism (5a, 5b) acting upon the rocking lever (3), which pivots the rocking lever (3) and presses the clamping claw (3a) thereof to the bottom leg (1 b) of the bearing rail (1),
- a stop (2b) arranged in the case (2), which terminates the pivoting movement of the rocking lever (3), and
- an adjustable locking device (6) for setting a locking state, in which
- the clamping claw (3a) of the rocking lever (3) is pressed against the bottom leg (1 b) of the bearing rail (1) and
- a section (3b) of the rocking lever (3) is pressed to the stop (2b).

2. Fastening device according to claim 1, wherein the spring mechanism is a leg spring (5a) arranged in a biased state on the axle (4), with its one leg (5a1) abutting against the inside wall of the case (2) and its other leg (5a2) pressing against the rocking lever (3).

3. Fastening device according to claim 2, wherein the locking device (6) is a cylinder screw rotatably guided in a self-locking way in a threaded hole of the case (2).

4. Fastening device according to claim 1, wherein the locking device (6) is a cylinder screw arranged in a threaded hole of the case (2) and the spring mechanism is a coil spring (5b) arranged on the shaft of the cylinder screw, wherein, in the unlocked state, the coil spring (5b) only is pressing against the rocking lever (3), and in the locked state, the cylinder screw and the coil spring are pressing against the rocking lever (3).

## Revendications

1. Dispositif de fixation pour la fixation d'un dispositif d'installation sur un rail porteur (1) comprenant une branche supérieure et une branche inférieure (1a, 1b), le dispositif de fixation présentant les caractéristiques suivantes:
- un boîtier (2) avec une griffe de maintien (2a) pour entourer la branche supérieure (1 a) du rail porteur (1),
- un levier de basculement (3), qui comprend une griffe de serrage (3a) et qui est logé de manière pivotante sur un axe (4) inséré dans le boîtier (2),
- un mécanisme à ressort (5a, 5b) agissant sur le levier de basculement (3), qui fait pivoter le levier de basculement (3) et dont la griffe de serrage (3a) comprime la branche inférieure (1 b) du rail porteur (1),
- une butée (2b) disposée dans le boîtier (2), qui limite le mouvement de pivotement du levier de basculement (3), et
- un dispositif de blocage réglable (6) pour l'établissement d'un état de blocage, dans lequel
- la griffe de serrage (3a) du levier de basculement (3) est comprimée contre la branche inférieure (1 b) du rail porteur (1) et
- une portion (3b) du levier de basculement (3) est pressée contre la butée (2b).

2. Dispositif de fixation selon la revendication 1, le mécanisme à ressort étant un ressort à branches (5a) disposé avec une précontrainte sur l'axe (4), dont une branche (5a1) s'appuie dans le boîtier (2) et l'autre branche (5a2) comprime le levier de basculement (3).

3. Dispositif de fixation selon la revendication 2, le dispositif de blocage (6) étant une vis à tête cylindrique qui est maintenue de manière rotative et autobloquante dans un alésage fileté du boîtier (2).

4. Dispositif de fixation selon la revendication 1, le dispositif de blocage (6) étant une vis à tête cylindrique qui est disposée dans un alésage fileté du boîtier (2) et le mécanisme à ressort étant un ressort hélicoïdal (5b) qui est disposé sur la tige de la vis à tête cylindrique, et, dans l'état non bloqué, seul le ressort hélicoïdal (5b) s'appuyant contre le levier de basculement (3) et, dans l'état bloqué, la vis à tête cylindrique et le ressort hélicoïdal s'appuyant contre le levier de basculement (3).
